**Europäisches Patentamt**

**European Patent Office**

**Office européen des brevets**

(19)

(11) Veröffentlichungsnummer: **0 045 298**
**A1**

(12) # EUROPÄISCHE PATENTANMELDUNG

(21) Anmeldenummer: **81890130.8**

(22) Anmeldetag: **24.07.81**

(51) Int. Cl.³: **F 16 K 19/00**

(30) Priorität: **28.07.80 AT 3924/80**

(43) Veröffentlichungstag der Anmeldung: **03.02.82**
**Patentblatt 82/5**

(84) Benannte Vertragsstaaten: **CH DE FR IT LI**

(71) Anmelder: **Rupert Fertinger Armaturen und Metallwaren,**
**Wienerstrasse 46, A-2120 Wolkersdorf (AT)**

(72) Erfinder: **Fertinger, Rupert, Wienerstrasse 46,**
**A-2120 Wolkersdorf (AT)**

(74) Vertreter: **Boeckmann, Peter, Dipl.-Ing. et al,**
**Patentanwälte Dipl.-Ing. Peter Boeckmann, Dipl.-Ing.**
**Leo Braunelss Strohgasse 10, A-1030 Wien (AT)**

(54) **Schraubenmutter für die Befestigung eines Wasserventiles od. dgl.**

(57)    Eine Schraubenmutter (8) dient zur Befestigung eines Wasserventiles (1) od. dgl. an einem Grundkörper, beispielsweise einem Waschtisch, einer Badewanne oder einer Arbeitsplatte (5). Das Wasserventil (1) weist hiezu einen Gewindeteil (2) auf, der eine Öffnung (7) im Grundkörper durchsetzt. Auf diesen Gewindeteil (2) wird die Schraubenmutter (8) aufgeschraubt und stützt sich mit einem Flansch (9), vorzugsweise unter Zwischenschaltung einer Beilage (10) am Grundkörper ab. Um eine sichere und leicht durchzuführende Fixierung der Schraubenmutter (8) zu ermöglichen, ist in deren Flansch (9) zumindest ein in Richtung zum Grundkörper verschiebbarer und in seiner Lage fixierbarer Bolzen (12) vorgesehen, durch dessen Verschiebung in Richtung zum Grundkörper die Schraubenmutter (8) gegenüber dem Grundkörper verklemmt wird. Der Bolzen (12) ist zweckmäßig ein Schraubenbolzen, der in ein Gewindeloch (11) im Flansch (9) eingeschraubt ist. Vorteilhaft sind im Flansch (9) drei in etwa gleichlangen Winkelabständen angeordnete Bolzen (12) vorgesehen.

0045298

Schraubenmutter für die Befestigung eines
Wasserventiles od. dgl.

Die Erfindung betrifft eine Schraubenmutter, die auf einen
vorzugsweise hülsenförmigen Gewindeteil eines Wasserventiles
od. dgl. für die Befestigung desselben an einem Grundkörper,
beispielsweise einem Waschtisch, einer Badewanne oder einer
Arbeitsplatte aufschraubbar ist, welcher Grundkörper mit einer vom Gewindeteil durchsetzten Öffnung versehen ist, wobei
die Schraubenmutter einen Flansch aufweist, der sich, vorzugsweise unter Zwischenschaltung einer Beilage, am Grundkörper abstützt.

Viele der heute verwendeten Wasserarmaturen werden nicht
an der Mauer befestigt, sondern unmittelbar an dem Gegenstand, der mit Wasser versorgt werden soll, oder an einer
Platte, an der dieser Gegenstand abgestützt ist. So sind
heute die Waschtischarmaturen fast ausschließlich am Waschtisch und die Armaturen für die Abwäschen von Einbauküchen
fast ausschließlich an der Arbeitsplatte befestigt und auch
bei modernen Badewannen erfolgt die Befestigung der Armaturen häufig in einem etwa horizontal verlaufenden Wandteil.
Zur Befestigung derartiger Armaturen sind diese mit einem
Gewindeteil versehen, der durch eine Öffnung im Grundkörper,
an dem die Armatur befestigt werden soll, hindurchgeführt
wird, wobei dann auf diesen Gewindeteil eine Schraubenmutter
aufgeschraubt wird. Diese Schraubenmutter weist einen Flansch
auf, der bei angezogener Schraubenmutter, in der Regel unter
Zwischenschaltung einer Beilagscheibe, den Grundkörper zwischen sich und einem Vorsprung der Armatur einspannt, so daß
dann die Armatur in ihrer Lage fixiert ist.

Der Gewindeteil, auf den die Schraubenmutter aufgeschraubt wird, ist in der Regel hülsenförmig ausgebildet und

- 2 -

weist einen beträchtlichen Durchmesser auf, da durch diesen Gewindeteil die Zuleitungen für das Warm- und Kaltwasser sowie häufig auch ein Gestänge für die Betätigung des Ablaufverschlusses eines Waschtisches od. dgl. hindurchgeführt sind. Außerdem ist immer die Schraubenmutter schlecht zugänglich und es steht wenig Platz für den Angriff eines Werkzeuges zum Verdrehen der Schraubenmutter zur Verfügung. Dazu kommt, daß die Schraubenmutter praktisch nur mit einer Zange verdreht werden kann, deren Betätigungsarme seitlich abstehen, da beispielsweise die Verwendung eines Steckschlüssels wegen der durch den Gewindeteil hindurchgeführten Wasserzuleitungen nicht möglich ist.

Die vorliegende Erfindung hat sich zur Aufgabe gestellt, diese Nachteile zu vermeiden und eine Schraubenmutter für die Befestigung eines Wasserventiles od. dgl. an einem Grundkörper zu schaffen, mit welcher auf einfache Weise eine sichere Befestigung des Wasserventiles od. dgl. vorgenommen werden kann. Die Erfindung geht hiebei aus von einer Schraubenmutter der eingangs beschriebenen Art und besteht im wesentlichen darin, daß im Flansch zumindest ein in Richtung zum Grundkörper verschiebbar und in seiner Lage fixierbarer Bolzen vorgesehen ist. Die Verschiebung eines solchen Bolzens ist wesentlich einfacher zu bewerkstelligen als das Verdrehen der Schraubenmutter, wobei durch den Bolzen eine einwandfreie Fixierung des Wasserventiles od. dgl. sichergestellt ist. Insbesondere dann, wenn gemäß einer bevorzugten Ausführungsform der Erfindung im Flansch Gewindelöcher mit darin eingeschraubten Schraubenbolzen vorgesehen sind, kann auf einfache Weise eine Befestigung des Wasserventiles am Grundkörper vorgenommen werden. Es ist dann lediglich nötig, die Schraubenmutter händisch so weit zu verdrehen, bis sie am Grundkörper anliegt und ohne Zuhilfenahme eines Werkzeuges nicht weiter verdreht werden kann. Dieser Arbeitsvorgang ist ohne Schwierigkeiten durchführbar. Anschließend werden die im Flansch eingeschraubten Schraubenbolzen verdreht, wobei das Verdrehen dieser Schraubenbolzen, soferne sie einen Sechskantkopf aufweisen, mit einem Steckschlüssel, soferne sie einen geschlitzten Kopf aufweisen, mit einem Schraubenzieher erfolgen kann. In jedem Fall wird das Werkzeug zum Verdrehen der Schraubenbolzen in Achsrichtung des Gewindeteiles zugeführt und angesetzt und es ist eine Verdrehung des Werkzeuges und damit auch der Schraubenbolzen ohne Schwierigkeiten möglich, wobei hinzukommt, daß durch entsprechende Verlängerungen, wie sie beispielsweise bei Steckschlüsseln üblich sind, das Aufbringen der Drehbewegung an einer Stelle vorgenommen werden kann, an der genügend Platz hiefür zur Verfügung steht.

Besonders vorteilhaft ist es, wenn im Flansch drei in etwa gleichen Winkelabständen angeordnete Bolzen vorgesehen sind, da dann eine gleichmäßige Fixierung des Wasserventiles od. dgl. erfolgt.

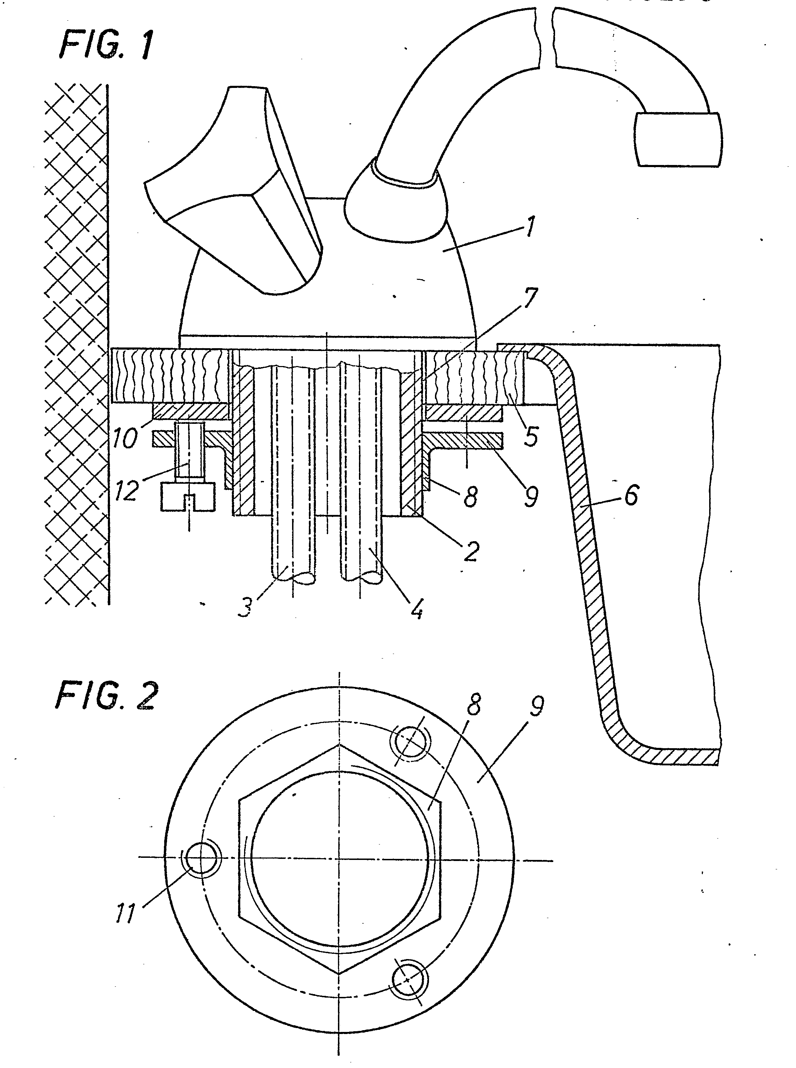

In der Zeichnung ist die Erfindung an Hand eines Ausführungsbeispieles schematisch veranschaulicht. Fig. 1 zeigt, teilweise im Schnitt, ein durch eine erfindungsgemäße Schraubenmutter fixiertes Mischventil und Fig. 2 stellt eine Draufsicht auf eine erfindungsgemäße Schraubenmutter dar.

Das zu befestigende Mischventil 1 weist einen hülsenförmigen Gewindeteil 2 auf, durch welchen eine Zuleitung 3 für das Kaltwasser und eine Zuleitung 4 für das Warmwasser hindurchgeführt ist. Beim dargestellten Ausführungsbeispiel ist das Mischventil 1 an der Arbeitsplatte 5 befestigt, in welche ein Spülbecken 6 eingehängt ist, das über die Mischbatterie 1 mit Wasser versorgt wird. Die Arbeitsplatte 5 weist eine Öffnung 7 auf, durch die der Gewindeteil 2 hindurchgesteckt ist. In gleicher Weise kann auch die Befestigung des Mischventiles 1 in einem Waschtisch erfolgen, wobei dann der Gewindeteil 2 durch eine der Öffnung 7 entsprechende Öffnung im Waschtisch hindurchgeführt ist.

Die Fixierung des Mischventiles 1 erfolgt durch eine Schraubenmutter 8, die auf den Gewindeteil 2 aufgeschraubt wird, wobei die Schraubenmutter 8 mit einem Flansch 9 versehen ist, der sich unter Zwischenschaltung einer Beilagscheibe 10 gegen die Unterseite der Arbeitsplatte 5 abstützt.

Bei Verwendung der bisher bekannten Schraubenmuttern 8

- 4 -

mußten diese so weit angezogen werden, bis die Arbeitsplatte 5 fest zwischen dem Mischventil 1 und dem Flansch 9 festgeklemmt ist. Dies bereitete in der Regel beträchtliche Schwierigkeiten, da für den Angriff eines Werkzeuges zum Verdrehen der Schraubenmutter 8 wenig Platz zur Verfügung steht. Es kam daher häufig zu einer Lockerung des Mischventiles 1.

Bei der erfindungsgemäßen Schraubenmutter sind nun im Flansch 9 in etwa gleichlangen Winkelabständen Gewindelöcher 11 vorgesehen, in die Schraubenbolzen 12 eingeschraubt sind. Um eine einwandfreie Befestigung des Mischventiles 1 sicherzustellen, ist es bei Verwendung der erfindungsgemäßen Schraubenmutter 8 lediglich nötig, diese händisch so weit als möglich anzuziehen. Anschließend werden die Schraubenbolzen 12 durch einen Schraubenzieher oder, falls sie einen Sechskantkopf aufweisen, unter Verwendung eines Steckschlüssels angezogen, so daß sich dadurch die Schraubenmutter 8 gegen die Arbeitsplatte 5 verspannt. Die Verdrehung der Schraubenbolzen 12 kann hiebei ohne Schwierigkeiten erfolgen, da das Werkzeug für die Verdrehung von unten angesetzt wird und verdreht werden kann, wobei sogar bei Verwendung einer entsprechenden Verlängerung der Angriff vom Werkzeug für die Durchführung der Verdrehung an einer Stelle erfolgen kann, an der das Spülbecken nicht mehr im Wege ist. Bei Verwendung der erfindungsgemäßen Schraubenmutter ist also die Befestigung des Mischventiles 1 wesentlich leichter und einfacher durchzuführen als dies mit den bekannten Schraubenmuttern möglich war.

In der Zeichnung ist der Spalt zwischen dem Flansch 9 und der Beilagscheibe 10 übertrieben groß dargestellt, um die Funktion der Schraubenbolzen 12 besser sichtbar zu machen. In der Praxis ist dieser Spalt selbstverständlich kleiner und dadurch bestimmt, wie weit die Schraubenmutter 8 ohne Zuhilfenahme eines Werkzeuges angezogen werden kann.

- 5 -

Patentansprüche:

1. Schraubenmutter, die auf einen vorzugsweise hülsenförmigen Gewindeteil eines Wasserventiles od. dgl. für die Befestigung desselben an einem Grundkörper, beispielsweise einem Waschtisch, einer Badewanne oder einer Arbeitsplatte, aufschraubbar ist, welcher Grundkörper mit einer vom Gewindeteil durchsetzten Öffnung versehen ist, wobei die Schraubenmutter einen Flansch aufweist, der sich, vorzugsweise unter Zwischenschaltung einer Beilage, am Grundkörper abstützt, dadurch gekennzeichnet, daß im Flansch (9) zumindest ein in Richtung zum Grundkörper (5) verschiebbarer und in seiner Lage fixierbarer Bolzen (12) vorgesehen ist.

2. Schraubenmutter nach Anspruch 1, dadurch gekennzeichnet, daß im Flansch (9) Gewindelöcher (11) mit darin eingeschraubten Schraubenbolzen (12) vorgesehen sind.

3. Schraubenmutter nach Anspruch 1 oder 2, dadurch gekennzeichnet, daß im Flansch (9) drei in etwa gleichlangen Winkelabständen angeordnete Bolzen (12) vorgesehen sind.

0045298

FIG. 1

FIG. 2

0045298

Nummer der Anmeldung

EP 81 89 0130

**Europäisches Patentamt**

## EUROPÄISCHER RECHERCHENBERICHT

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | DE - A - 1 650 304 (BROEN ARMATUR IS)  * Insgesamt *  ----- | 1-3 | F 16 K 19/00 |

**RECHERCHIERTE SACHGEBIETE (Int. Cl.³)**

F 16 K

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 06-10-1981 | V. REETH |

EPA form 1503.1   06.78